# FASCICULE DE BREVET EUROPEEN

(11) **EP 1 289 779 B1**
(45) Date de publication et mention de la délivrance du brevet: **19.01.2005**
(21) Numéro de dépôt: 01949339.4
(22) Date de dépôt: 14.05.2001
(51) Int. Cl.: B60C 15/024, B60C 13/00, B60C 15/02, B60C 17/00, B60C 3/06, B60C 17/04, B60B 21/02

(54) **PNEUMATIQUE COMPRENANT UN PROFILE DE RENFORT DANS AU MOINS UN FLANC ET ENSEMBLE MONTE PNEUMATIQUE/JANTE**
REIFEN MIT EINEM VERSTÄRKUNGSELEMENT IN MINDESTENS EINER SEITENWAND UND MONTIERTE REIFEN/FELGE EINHEIT
TYRE COMPRISING A REINFORCING PROFILED SECTION IN AT LEAST ONE SIDEWALL, AND MOUNTED TYRE/RIM ASSEMBLY

(30) Priorité: 22.05.2000 FR 0006598; 26.05.2000 FR 0006876
(43) Date de publication de la demande: 12.03.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: DRIEUX, Jean-Jacques, F-63530 Volvic (FR); FAURE, Jean-Claude, F-63200 Mozac (FR); POMPIER, Jean-Pierre, Greenville, SC 29607 (US)
(74) Mandataire: Diernaz, Christian
(86) Numéro de dépôt international: PCT/EP2001/005459
(87) Numéro de publication internationale: WO 2001/089861

(56) Documents cités:
- WO-A-00/41467
- WO-A-95/23073
- FR-A- 2 234 148
- FR-A- 2 548 095
- GB-A- 1 456 215
- GB-A- 2 061 199
- US-A- 5 785 781

## Description

La présente invention concerne un pneumatique destiné à être monté sur une jante ayant au moins un premier siège tronconique dont la génératrice a une extrémité axialement extérieure plus proche de l'axe de rotation que l'autre extrémité axialement intérieure; elle concerne également un ensemble monté comprenant un tel pneumatique monté sur une jante.

Un tel pneumatique est décrit dans la demande US 5,785,781 de la demanderesse. Il comprend au moins un premier bourrelet, destiné à être monté sur ledit premier siège de jante incliné vers l'extérieur, ledit premier bourrelet, de largeur axiale usuelle et terminé axialement à l'extérieur par une pointe de bourrelet, ayant un siège de bourrelet dont la génératrice a son extrémité axialement extérieure plus proche de l'axe de rotation que son extrémité axialement intérieure, ladite génératrice étant prolongée axialement à l'extérieur par une face extérieure délimitant la pointe de bourrelet, ladite face faisant avec l'axe de rotation un angle γ , ouvert radialement et axialement vers l'extérieur, et inférieur à 90°. L'armature de carcasse radiale dudit pneumatique, ancrée dans chaque bourrelet à au moins un élément de renforcement annulaire inextensible, possède un profil méridien, lorsque le pneumatique est monté sur sa jante de service et gonflé à sa pression de service, avec un sens de courbure constant au moins dans le flanc prolongeant ledit bourrelet terminé par la pointe et qui est tel que, dans ledit bourrelet, la tangente au point de tangence dudit profil avec l'élément annulaire inextensible dudit bourrelet fait avec l'axe de rotation un angle φ ouvert vers l'extérieur d'au moins 70°.

Le bourrelet d'un tel pneumatique, et plus particulièrement la structure de l'accrochage de l'armature de carcasse peut être variable. Dans la demande internationale précitée, l'armature de carcasse est ancrée à un élément de renforcement annulaire inextensible (généralement une tringle enrobée) de manière usuelle, c'est-à-dire par enroulement de ladite armature autour dudit élément pour former un retournement partant de la base de l'élément et s'élevant radialement vers l'extérieur.

Dans ce type de pneumatique, les structures de bourrelet peuvent être déterminées pour permettre une modification (accroissement) du serrage de la pointe de bourrelet sur la jante de montage en fonction de la tension de l'armature de carcasse, ce qui conduit à avoir un serrage sur jante initial de faible valeur sachant que ledit serrage augmentera lorsque le pneumatique sera gonflé à sa pression recommandée. Ces structures de bourrelets présentent, lorsque les conditions de roulage du pneumatique sont telles que les bourrelets sont portés à haute température, et en fin de durée de vie, des faiblesses en endurance provenant d'un certain déroulement de l'armature de carcasse autour de l'élément annulaire de renforcement du talon de bourrelet lié à une réduction du serrage, en particulier lorsque le retournement de l'armature de carcasse est court.

Pour remédier à ces inconvénients, il a été proposé dans la demande de brevet déposée sous le numéro PCT/EP99/10471 par la demanderesse publiée sous le numéro WO-A-0 041 467 et constituant un document tel que défini à l'article 54(3) CBE, un nouveau pneumatique comprenant au moins un premier bourrelet, dont le siège a une génératrice dont l'extrémité axialement intérieure est sur un cercle de diamètre supérieur au diamètre du cercle sur lequel se trouve l'extrémité axialement extérieure, le talon de bourrelet étant axialement à l'intérieur, alors que la pointe de bourrelet est axialement à l'extérieur, et une armature de carcasse radiale s'enroulant dans chaque bourrelet autour d'au moins un élément de renforcement de talon, annulaire, inextensible et enrobé de mélange caoutchouteux, en allant de l'intérieur à l'extérieur pour former un retournement, s'étendant dans un profilé de mélange caoutchouteux sous forme de coin délimité par deux côtés issus d'un sommet A localisé sous la section de l'élément annulaire, le mélange caoutchouteux formant le profilé, axialement adjacent à l'élément annulaire, ayant une dureté Shore A supérieure à la (aux) dureté(s) Shore A des mélanges caoutchouteux respectivement radialement au dessus dudit élément et du profilé axialement adjacent. En outre, lorsque ce pneumatique est monté sur sa jante de service et gonflé à la pression recommandée, le profil méridien d'armature de carcasse a un sens de courbure constant dans le premier bourrelet et le flanc le prolongeant radialement et a une tangente TT' au point de tangence T dudit profil avec l'élément annulaire dudit premier bourrelet faisant avec l'axe de rotation un angle φ ouvert vers l'extérieur et compris entre 45° et 70°.

Dans cette dernière structure de bourrelet de pneumatique, l'inclinaison de l'armature de carcasse au raccordement avec l'élément de renforcement annulaire inextensible conduit à une augmentation de la composante axiale de l'effort exercé par ladite armature sur ledit élément de renforcement annulaire et permet effectivement d'augmenter le serrage de l'armature de carcasse sous l'élément de renforcement annulaire. Toutefois, le fait d'employer un angle d'ouverture de l'armature de carcasse compris entre 45° et 70° au point de tangence avec l'élément annulaire, peut entraîner en utilisation, des problèmes d'agressions au niveau de la surface extérieure du pneumatique dans la région de ses flancs. En particulier, et comparativement à la structure de pneumatique décrite dans le document US 5,785,781 pour laquelle l'angle que fait l'armature de carcasse au point de tangence avec l'élément annulaire inextensible des bourrelets est supérieur à 70°, la structure décrite dans la demande rappelée conduit à avoir des flancs qui sont davantage exposés aux griffures et frottements divers affectant son aspect esthétique et pouvant affecter également l'intégrité du pneumatique. À ces agressions de type griffure, il faut ajouter les chocs auxquels sont soumis les flancs selon cette dernière structure décrite et qui peuvent nuire à l'intégrité desdits flancs y compris celle de l'armature de carcasse.

Le pneumatique, conforme à l'invention et vu en section méridienne, comprend au moins un premier bourrelet, dont le siège a une génératrice dont l'extrémité axialement intérieure est sur un cercle de diamètre supérieur au diamètre du cercle sur lequel se trouve l'extrémité axialement extérieure, le talon de bourrelet étant axialement à l'intérieur, alors que la pointe de bourrelet est axialement à l'extérieur, et une armature de carcasse radiale s'enroulant dans chaque bourrelet autour d'au moins un élément de renforcement de talon, annulaire, inextensible et enrobé de mélange caoutchouteux, en allant de l'intérieur à l'extérieur pour former un retournement, s'étendant dans un profilé de mélange caoutchouteux sous forme de coin ayant une dureté Shore A supérieure à la (aux) dureté(s) Shore A des mélanges caoutchouteux respectivement radialement au dessus du dit élément et du profilé axialement adjacent, le profil méridien d'armature de carcasse, lorsque le pneumatique est monté sur sa jante de service et gonflé à la pression recommandée, a un sens de courbure constant dans le premier bourrelet et le flanc le prolongeant radialement, et a une tangente TT' au point de tangence T dudit profil avec l'élément annulaire dudit premier bourrelet faisant avec l'axe de rotation un angle φ ouvert vers l'extérieur et compris entre 45° et 70°, ce pneumatique étant
tel que, vu en coupe méridienne,
- au moins le flanc prolongeant le premier bourrelet comprend un profilé ayant, vu en coupe, sensiblement la forme d'un croissant délimité par une face interne et une face externe, ledit profilé s'étendant entre un point P1 et un point P2, le point P1 étant situé à une distance R1 supérieure au rayon externe Rte de l'élément annulaire de bourrelet et inférieure au rayon R0 du cercle sur lequel sont situés les points de l'armature de carcasse axialement les plus à l'extérieur du pneumatique monté sur sa jante et gonflé à sa pression d'utilisation, le point P2 étant situé à une distance R2 supérieure au rayon R0, les distances R1 et R2 étant mesurées perpendiculairement à l'axe de rotation du pneumatique;
- l'une des faces - interne ou externe - du profilé suit le profil de l'armature de carcasse;
- la trace de la face du profilé à l'opposé de la face dudit profilé au plus près de l'armature de carcasse présente un seul sens de courbure.

Le profilé peut être indifféremment placé axialement vers l'extérieur ou vers l'intérieur de l'armature de carcasse dans les flancs. Préférentiellement, l'angle que fait la tangente au point P1 sur la face du profilé opposée à la face au plus près de l'armature de carcasse avec la tangente TT' est, en valeur absolue, supérieur ou égal à 20°, de manière à conférer au flanc une rigidité appropriée et présenter une épaisseur suffisante pour protéger ledit flanc des agressions.

Outre le rôle bénéfique sur les agressions aux flancs rempli par la présence d'un profilé dans les flancs, on constate une influence bénéfique sur la résistance du pneumatique conforme à l'invention lorsque ce dernier est soumis à un roulage à pression de gonflage très faible voire nulle. En effet, l'ajout d'au moins un profilé d'épaisseur appropriée, ce profilé couplé à l'armature de carcasse (c'est-à-dire lié à cette armature par un mélange de gomme) rigidifie le flanc dans la direction radiale et diminue sensiblement les déformations d'écrasement à charge fixée lorsque la pression est nulle et permet ainsi d'augmenter sa capacité de roulage dans ces conditions particulières/exceptionnelles, en particulier avant même qu'un appui de soutien entre en action pour supporter la charge.

Complémentairement, la demanderesse a réalisé un pneumatique conforme à la description du brevet US 5,785,781, c'est-à-dire un pneumatique comprenant au moins un premier bourrelet, dont le siège a une génératrice dont l'extrémité axialement intérieure est sur un cercle de diamètre supérieur au diamètre du cercle sur lequel se trouve l'extrémité axialement extérieure, et une armature de carcasse, le profil méridien d'armature de carcasse, lorsque le pneumatique est monté sur sa jante de service et gonflé à sa pression de service, ayant un sens de courbure constant au moins dans le flanc prolongeant ledit premier bourrelet et qui est tel que, dans ledit bourrelet, la tangente au point de tangence dudit profil avec l'élément annulaire inextensible du bourrelet fait avec l'axe de rotation un angle φ ouvert vers l'extérieur d'au moins 70°, auquel il a été ajouté :
- dans au moins le flanc prolongeant le premier bourrelet un profilé ayant, vu en coupe, sensiblement la forme d'un croissant délimité par une face interne et une face externe, ledit profilé s'étendant entre un point P1 et un point P2, le point P1 étant situé, par rapport à l'axe de rotation, à une distance R1 supérieure au rayon externe Rte de l'élément annulaire de bourrelet et inférieure au rayon R0 du cercle sur lequel sont situés les points de l'armature de carcasse axialement les plus à l'extérieur du pneumatique monté sur sa jante et gonflé à sa pression d'utilisation, le point P2 étant situé à une distance R2 supérieure au rayon R0, les distances R1 et R2 étant mesurées perpendiculairement à l'axe de rotation du pneumatique, l'une des faces - interne ou externe - du profilé suivant le profil de l'armature de carcasse et la trace de la face du profilé à l'opposé de la face dudit profilé au plus près de l'armature de carcasse présentant un seul sens de courbure.

Il a également été constaté un effet bénéfique sur la protection vis-à-vis des agressions des flancs dudit pneumatique particulièrement appréciable lorsque ledit pneumatique est partiellement ou totalement dégonflé. En effet, dans la partie du pneumatique affectée par l'écrasement sur la chaussée, les flancs sont soumis à des flexions vers l'extérieur qui exposent lesdits flancs à des agressions. Ce type de pneumatique étant prévu pour rouler dans des conditions de faible pression (voire de pression nulle), il s'en suit une sensibilité accrue aux agressions externes. Afin de diminuer cette sensibilité, il est avantageux de prévoir la présence d'un profilé tel que décrit précédemment pour des angles φ ouverts vers l'extérieur d'au moins 45°.

Le profilé peut être réalisé en mélange caoutchouteux ou en matière plastique compatible avec les mélanges de caoutchouc du pneumatique.

Dans une variante préférentielle, le profilé est recouvert d'une armature complémentaire de renforcement sur au moins une partie - entre P1 et P2- de sa face axialement opposée à la face dudit profilé qui est au plus près de l'armature de carcasse, ladite armature complémentaire étant composée, par exemple, par une ou plusieurs nappes renforcées par une pluralité de fils ou câbles orientés de la même manière dans chaque nappe.

De manière à assurer un ancrage satisfaisant du profilé, il est avantageux que l'armature complémentaire de renforcement se prolonge radialement vers l'intérieur au delà du point P1 du profilé le long de l'armature de carcasse pour, par exemple passer radialement sous l'élément annulaire.

Dans la pratique et vu en coupe méridienne, si le point P1 du profilé radialement le plus à l'intérieur est situé près du point de l'élément annulaire de bourrelet de développement circonférentiel maximal [en pratique le rayon R1 du cercle sur lequel est situé le point P1 est compris entre Rt et (3Rt+Ro)/4], la surépaisseur créée par ce profilé peut, parfois, être la cause d'échauffement supplémentaire dans la partie du pneumatique au voisinage dudit élément annulaire : en effet, le surcroît de rigidité de flexion de la partie du flanc se raccordant au bourrelet conduit à un accroissement des sollicitations sur ledit bourrelet. Dans cette dernière configuration et pour éviter un accroissement des sollicitations dans les bourrelets, on réalise une rainure de découplage orientée suivant la direction circonférentielle, cette rainure étant ouverte axialement et radialement vers l'extérieur du premier bourrelet. Cette rainure est délimitée par une surface radialement intérieure et une surface radialement extérieure de manière à ce que, vue en coupe, le point d'intersection K desdites deux surfaces soit situé à une distance Rri de l'axe de rotation du pneumatique sensiblement égale à R1 de façon à permettre un fonctionnement en articulation sensiblement autour du point P1. Le point d'intersection K des surfaces radialement intérieure et extérieure délimitant la rainure correspond au point commun de tangence desdites surfaces avec une droite perpendiculaire à l'axe de rotation.

Par distance sensiblement égale à R1, il faut entendre une distance qui peut être inférieure ou supérieure à R1, l'écart entre les deux distances étant inférieur à 20% de R1.

Afin de présenter un fonctionnement amélioré lors d'un roulage à pression nulle ou quasi nulle, il est avantageux que, vue en coupe méridienne, la surface radialement intérieure délimitant la rainure présente un point axialement et radialement à l'extérieur situé à une distance de l'axe de rotation Rre supérieure ou égale à la distance Rri et que les profils desdites surfaces soient appropriés pour venir en appui l'une sur l'autre lors du roulage à pression nulle ou quasi nulle et ainsi participer au support de la charge.

Cette rainure présente également le même intérêt dans le cas d'un pneumatique tel que décrit dans le brevet US 5,785,781 dont le contenu est ici incorporé par référence.

Le pneumatique selon l'invention offre également l'avantage de pouvoir réaliser, pour une même dimension de pneumatique équipant un véhicule donné, un allègement substantiel de l'ensemble monté comprenant une roue de montage, le pneumatique et des moyens permettant d'éviter le cloquage du sommet du pneumatique lorsque sur véhicule la pression dans cet ensemble monté est nulle ou quasi nulle.

Le cloquage du sommet se produit dans la partie du pneumatique venant au contact avec la chaussée dès lors que ledit sommet à double courbure (circonférentielle et transversale) n'est plus appliqué contre ladite chaussée par la pression de gonflage interne; il se produit alors une variation brusque des courbures, le pneumatique ne touchant la chaussée que sur le pourtour de l'empreinte.

Dans la demande déjà citée (PCT/EP99/10471), l'ensemble monté montré comprend un pneumatique monté sur une jante présentant des sièges de diamètres différents et un anneau interne de soutien s'appuyant sur une portée cylindrique. On note que la plus grande largeur de l'ensemble monté est donnée par les points du bourrelet et de la jante axialement les plus à l'extérieur. On constate que l'anneau de soutien pour être efficace doit être suffisamment large pour à la fois bloquer le talon de l'un des bourrelets et soutenir la partie médiane du pneumatique tout en réduisant les risques de cloquage du sommet lors d'un roulage à pression nulle. Il est intéressant de pouvoir réaliser un ensemble monté allégé par rapport à ce dernier ensemble monté en conservant les caractéristiques fonctionnelles de cet ensemble en réduisant la largeur de la jante mesurée entre les points axialement les plus à l'extérieur.

Dans ce but, il est proposé un ensemble roulant formé d'un pneumatique selon l'invention, d'une jante de montage et de moyen limitant le cloquage du pneumatique lors d'un roulage à pression nulle.

Cet ensemble comprend :
- un pneumatique comprenant un sommet, des flancs et des bourrelets, chaque bourrelet ayant un siège ayant une génératrice dont l'extrémité axialement intérieure est sur un cercle de diamètre supérieur au diamètre du cercle sur lequel se trouve l'extrémité axialement extérieure, le talon de bourrelet étant axialement à l'intérieur, alors que la pointe de bourrelet est axialement à l'extérieur, et une armature de carcasse radiale s'enroulant dans chaque bourrelet autour d'au moins un élément de renforcement de talon, annulaire, inextensible et enrobé de mélange caoutchouteux, en allant de l'intérieur à l'extérieur pour former un retournement, s'étendant dans un profilé de mélange caoutchouteux sous forme de coin ayant une dureté Shore A supérieure à la (aux) dureté(s) Shore A des mélanges caoutchouteux respectivement radialement au dessus du dit élément et du profilé axialement adjacent, le profil méridien d'armature de carcasse, lorsque le pneumatique est monté sur sa jante de service et gonflé à la pression recommandée, a un sens de courbure constant dans chaque bourrelet et dans les flancs les prolongeant radialement, et a une tangente TT' au point de tangence T dudit profil avec l'élément annulaire de chaque bourrelet faisant avec l'axe de rotation un angle φ ouvert vers l'extérieur et compris entre 45° et 70°,
- une jante comportant deux sièges tronconiques, la génératrice de chaque siège faisant avec l'axe de rotation un angle α compris entre 4° et 30°, l'extrémité axialement extérieure d'une génératrice étant distante de l'axe de rotation d'une quantité inférieure à la distance séparant l'extrémité axialement intérieure du même axe, lesdits sièges tronconiques étant délimités axialement à l'extérieur par des saillies à parois axialement intérieures tronconiques, la jante comportant en outre des moyens de support destinés au moins à empêcher le cloquage du sommet du pneumatique, c'est-à-dire des moyens pour astreindre ledit sommet à rester en contact avec le sol dans des conditions de roulage à pression nulle,
cet ensemble est caractérisé en ce que, lorsque ce pneumatique est monté sur sa jante et gonflé à sa pression de service et est vu en section méridienne :
- au moins un flanc prolongeant un premier bourrelet comprend un profilé ayant, vu en coupe, sensiblement la forme d'un croissant délimité par une face interne et une face externe, ledit profilé s'étendant entre un point P1 et un point P2, le point P1 étant situé à une distance R1 supérieure au rayon externe Rte de l'élément annulaire de bourrelet et inférieure au rayon R0 du cercle sur lequel sont situés les points de l'armature de carcasse axialement les plus à l'extérieur lorsque le pneumatique est gonflé, le point P2 étant situé à une distance R2 supérieure au rayon R0, les distances R1 et R2 étant mesurées perpendiculairement à l'axe de rotation du pneumatique;
- l'une des faces - interne ou externe - du profilé suit le profil de l'armature de carcasse;
- la trace de la face du profilé à l'opposé de la face dudit profilé la plus proche de l'armature de carcasse présente un seul sens de courbure.

Le pneumatique selon l'invention ayant des performances améliorées vis-à-vis des agressions des flancs permet, tout en conservant les performances conférées par sa structure de bourrelet en roulage à pression faible ou nulle, de réaliser une réduction de la largeur maximale de la jante de montage ce qui se traduit par un allègement sensiblement proportionnel. En outre, la réduction de la largeur de jante entraîne une réduction de la largeur de l'appui de soutien ce dernier se trouvant de fait mieux positionné sous la bande de roulement du pneumatique (ce qui se traduit encore par un gain de poids).

La présence d'un profilé dans les flancs du pneumatique, permet par une adaptation à la portée de l'homme de métier de réduire encore la largeur de l'anneau de soutien : en effet, le supplément de rigidité des flancs conféré par la présence des profilés permet de réduire la largeur de l'appui puisque les flancs coopèrent avec l'appui pour porter la charge à pression de gonflage nulle et limiter les déformations sous ces conditions. En limite, il est possible de réduire les dimensions de l'appui de soutien au juste nécessaire pour éviter que la bande de roulement "cloque" dans le contact avec la chaussée, les flancs assurant à eux seuls le port de la charge à pression de gonflage nulle.

D'autre part, la possibilité de réduire sensiblement la largeur de jante de montage de manière à ce que les bourrelets du pneumatique soient situés axialement à l'intérieur des points des flancs axialement les plus à l'extérieur offre l'avantage d'un montage aisé du pneumatique sur ladite jante qui en particulier ne requiert plus nécessairement la présence d'une gorge de montage sur la jante (ce type de montage est par exemple décrit dans le brevet US 5,836,366); il s'ensuit une simplification de la fabrication de la jante et une réduction conséquente des coûts de fabrication. Pour aller encore vers une réduction supplémentaire du poids de l'ensemble roulant, il est avantageux de prévoir que les sièges de la jante ont des diamètres de jante identiques.

D'autres caractéristiques et avantages de l'invention ressortent de la description faite ci-après en référence au dessin annexé qui montre de façon non limitative des formes de réalisation d'un pneumatique conforme à l'invention et qui associé à une jante appropriée constitue un ensemble pneumatique jante. Sur ce dessin :
- la figure 1 représente schématiquement une coupe méridienne partielle d'un pneumatique selon l'invention montrant un bourrelet, un flanc prolongé par un sommet, ce pneumatique étant monté sur une jante de montage;
- la figure 2 représente une coupe méridienne d'une variante de pneumatique selon l'invention monté sur sa jante de montage;
- la figure 3 montre une coupe méridienne d'un ensemble monté composé d'un pneumatique conforme à l'invention, de sa jante de montage et d'un appui de soutien;
- la figure 4 montre une coupe méridienne d'une variante d'ensemble monté composé d'un pneumatique conforme à l'invention et d'une jante de montage;
- la figure 5 montre une coupe méridienne de la variante d'ensemble monté de la figure 4 dans une configuration écrasée, le pneumatique étant non gonflé.

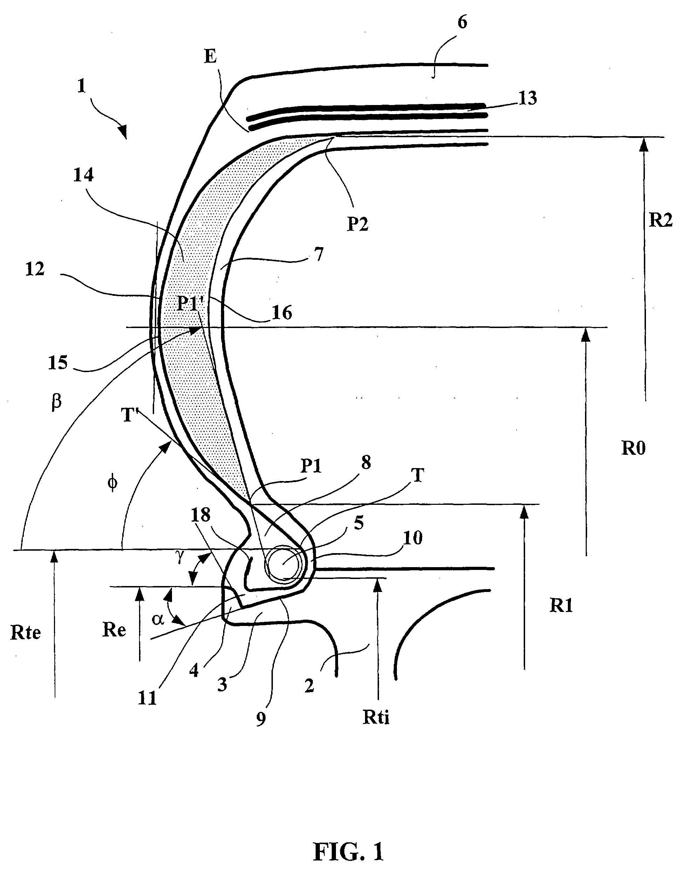

Sur la figure 1 est montrée une partie seulement d'un pneumatique 1 selon l'invention monté sur une jante de montage 2.

La jante 2 sur laquelle est monté le pneumatique 1 comprend un siège tronconique 3 dont la génératrice fait avec l'axe de rotation un angle α incliné vers l'extérieur du pneumatique, compris entre 4° et 30° et dans l'exemple décrit égal à 14°, inférieur à l'angle de la génératrice correspondante du siège du bourrelet du pneumatique. Ledit siège a son extrémité axialement extérieure sur un cercle de plus petit diamètre que celui du cercle sur lequel se trouve son extrémité axialement la plus intérieure. Le siège est prolongé axialement à l'extérieur par une saillie ou hump 4 dont la face intérieure fait avec l'axe de rotation un angle γ , dont le rayon Re est inférieur au rayon intérieur Rti de la tringle de renforcement 5 du bourrelet monté sur ledit siège.

La figure 1 montre une partie d'une bande de roulement 6 du pneumatique 1 reliée par un flanc 7 à un bourrelet 8 dont le siège 9 a une génératrice dont l'extrémité axialement intérieure est sur un cercle de diamètre supérieur au diamètre du cercle sur lequel se trouve l'extrémité axialement extérieure, le talon du bourrelet 10 étant axialement à l'intérieur alors que la pointe du bourrelet 11 est à l'extérieur. Le pneumatique 1 est renforcé par une armature de carcasse radiale 12 surmontée radialement d'une armature de sommet 13 composée de deux nappes superposées. L'armature de carcasse 12 est formée d'une seule nappe de câbles textiles ancrée dans le bourrelet 8 par retournement autour d'un élément annulaire de renforcement 5 inextensible (ici une tringle de type "tressée") en allant de l'intérieur vers l'extérieur pour former un retournement 18 s'étendant dans un profilé de mélange caoutchouteux sous forme de coin ayant une dureté Shore A supérieure à la (aux) dureté(s) Shore A des mélanges caoutchouteux respectivement radialement au dessus dudit élément et du profilé axialement adjacent. Lorsque le pneumatique 1 est monté sur sa jante 2 et gonflé à sa pression d'usage recommandée (comme c'est le cas sur la figure 1), cette armature de carcasse 12 adopte un profil méridien qui ne présente pas de changement de signe de sa courbure (i.e. sans point d'inflexion) entre le point de tangence T avec l'élément annulaire 5 et le raccordement avec l'armature de sommet (correspondant au point E axialement le plus à l'extérieur de la nappe de sommet la plus large); en outre, ce profil présente une tangente TT' au point de tangence T avec l'élément annulaire 5 faisant avec l'axe de rotation de l'ensemble monté un angle φ ouvert vers l'extérieur et compris entre 45° et 70°.

Le flanc 7 comprend un profilé 14 réalisé en mélange de caoutchouc ayant, dans le plan de la figure, une section en forme de croissant dont les pointes P1 et P2 sont sur des cercles de rayon respectivement R1 et R2, R1 étant compris entre le rayon extérieur Rte de l'élément annulaire 5 et le rayon R0 du cercle sur lequel sont situés les points de l'armature de carcasse axialement les plus à l'extérieur du pneumatique monté sur sa jante 2 et gonflé à sa pression d'utilisation, R2 étant supérieur au rayon R0.

Par ailleurs, le profilé 14 comprend deux faces, une première face 15 axialement à l'extérieur venant épouser la forme de l'armature de carcasse 12 et une seconde face 16 axialement à l'intérieur dont la trace sur le plan de la figure 1 présente une courbure de signe constant entre P1 et P2 et dont la tangente au point P1 le plus proche du bourrelet fait avec l'axe de rotation un angle β supérieur à 70° (dans le cas présent, cet angle β est égal à 80°).

Pour ne pas créer une surépaisseur pouvant avoir des conséquences défavorables sur l'endurance du pneumatique dans des conditions de roulage à pression nulle tout en maintenant une bonne résistance du flanc 7 aux agressions, il est préférable, comme cela est montré sur cette figure 1, que le point P1 soit choisi de manière à ce que la tangente P1'P1 à la trace de la face intérieure 16 du profilé 14 en ce point P1 soit telle qu'elle soit également tangente à la tringle de bourrelet 5 sur la partie axialement extérieure de ladite armature de bourrelet. De cette manière, il est possible tout en ayant un profilé assurant une protection efficace du flanc, d'éviter un épaississement de la partie du pneumatique située à la jonction du flanc et du bourrelet et de conserver une zone d'articulation au voisinage de P1.

Le profilé employé est réalisé ici en mélange de caoutchouc dont les caractéristiques mécaniques sont choisies de façon à être compatible avec les mélanges de caoutchouc composant le pneumatique et en particulier avec le mélange de l'armature de carcasse; l'épaisseur maximale du profilé est localisée préférentiellement dans la région du pneumatique axialement la plus large (c'est-à-dire aux points du pneumatique sur le cercle de rayon R0).

Le pneumatique décrit avec la figure 1 comprend un deuxième flanc se terminant par un deuxième bourrelet tous deux non représentés ici; ce deuxième flanc pouvant comprendre également un profilé de renfort qui peut être identique en dimensions et en position ou bien différent. De même le deuxième bourrelet peut être de diamètre différent ou de même diamètre; le deuxième bourrelet pouvant être ou non d'une construction analogue à la construction du premier bourrelet c'est-à-dire présentant un siège dont la génératrice possède une extrémité axialement intérieure sur un cercle de diamètre supérieur au diamètre du cercle sur lequel se trouve l'extrémité axialement extérieure.

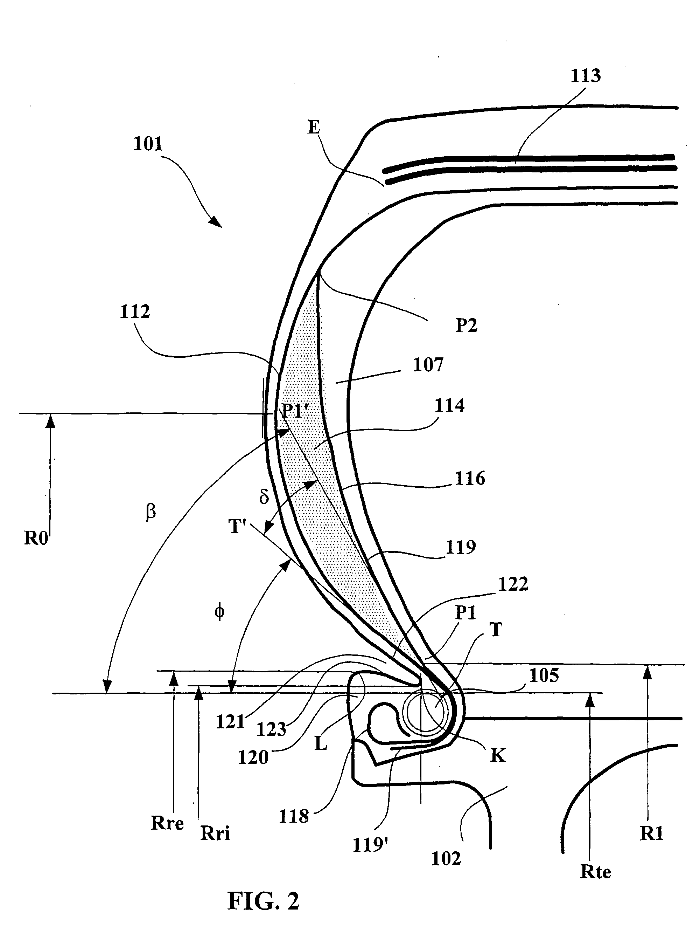

Dans la variante représentée à la figure 2, on distingue une partie seulement d'un pneumatique 101 selon l'invention monté sur une jante 102, ledit pneumatique comprenant une armature de carcasse 112 s'enroulant autour d'une tringle 105 en allant de l'intérieur vers l'extérieur pour former une boucle 118. Un profilé de protection 114 en forme de croissant et continu circonférentiellement est prévu dans le flanc 107 sur l'intérieur de l'armature de carcasse 112 et s'étend entre un point P1 assez proche du point de tangence T de l'armature de carcasse avec la tringle (c'est-à-dire se trouvant à une distance R1 de l'axe de rotation comprise entre Rte et (3Rte+R0)/4) et un point P2 situé dans le flanc du pneumatique entre le point dudit flanc de rayon R0 correspondant au point axialement le plus à l'extérieur de l'armature de carcasse 112 du pneumatique gonflé et le point E d'extrémité des nappes de sommet 113. La face intérieure 116 du profilé de protection 114 est recouverte d'une armature de renfort 119 s'étendant entre P1 et P2 de manière à augmenter la rigidité de ce profilé sous des efforts dirigés axialement de l'extérieur vers l'intérieur du pneumatique. La face intérieure 116 du profilé présente en P1 une tangente P1P1' qui fait un angle β supérieur à 70° avec l'axe de rotation.

En combinaison avec cette disposition du profilé 114 s'étendant dans le flanc jusqu'au voisinage de l'élément annulaire 105 du bourrelet, il est préférable de prévoir dans la partie du bourrelet 120 recouvrant radialement vers l'extérieur le retournement de carcasse 118 une rainure de découplage 121 orientée suivant la direction circonférentielle. Cette rainure 121 est délimitée par une surface radialement intérieure 123 et une surface radialement extérieure 122 de manière à ce que, vue en coupe, le point d'intersection K desdites deux surfaces soit situé à une distance Rri de l'axe de rotation du pneumatique sensiblement comprise entre R1 et Rte, le point K étant axialement à l'intérieur par rapport au point de la tringle 105 axialement le plus à l'extérieur. Le point d'intersection K des surfaces radialement intérieure et extérieure est déterminé comme le point de tangence desdites surfaces avec une droite perpendiculaire à l'axe de rotation.

En outre, la surface radialement intérieure 123 délimitant la rainure 121 présente un point L axialement et radialement à l'extérieur situé à une distance Rre de l'axe de rotation supérieure ou égale à la distance Rri et les profils des surfaces 122 et 123 limitant la rainure 121 sont appropriés pour que lesdites surfaces viennent en appui l'une sur l'autre lors d'un roulage à pression nulle ou quasi nulle.

De cette façon, il est possible, pour un roulage dans des conditions nominales à pression non nulle, de réduire l'incidence de la présence d'un profilé 114 dans le flanc et en particulier au voisinage du bourrelet par la présence d'une rainure de découplage tout en permettant une mise en appui de la surface radialement supérieure sur la surface radialement intérieure lors d'un roulage à pression réduite ou nulle.

Le réglage de cette mise en appui, à la portée de l'homme du métier, est fonction de la largeur et du profil de cette rainure.

Dans le cas présenté, l'armature 119 recouvrant la face intérieure du profilé est une nappe formée d'une pluralité de fil ou câbles disposés parallèlement les uns aux autres et ayant la même direction que les renforts de l'armature de carcasse 112. Avantageusement, la nappe 119 recouvrant le profilé est prolongée radialement au dessous du point P1 de manière à suivre le profil de l'armature de carcasse et à s'enrouler autour de la tringle pour former un retournement 119' de manière à assurer une meilleure cohésion du pneumatique et un meilleur ancrage du flanc du pneumatique au bourrelet.

L'angle δ, entre la tangente TT' à l'armature de carcasse au point de raccordement avec l'armature de renforcement de bourrelet 105 et la tangente P1P1' à la face interne du profilé au point P1, est supérieur à 20°. L'épaisseur maximale du profilé 114 est localisé sensiblement radialement sous le point d'armature de carcasse de rayon R0.

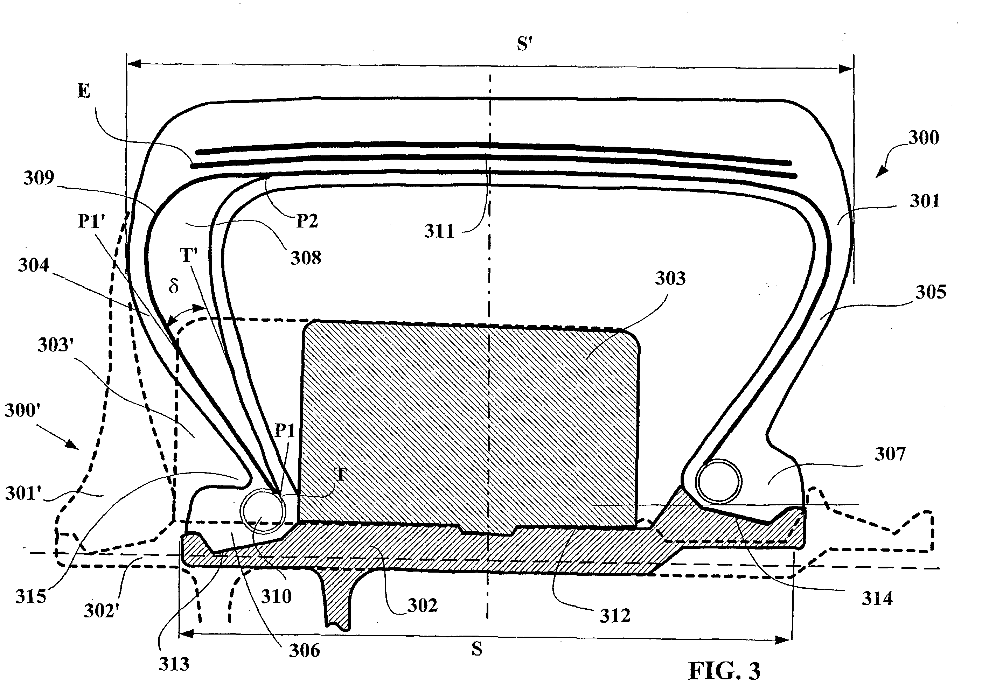

La figure 3 présente en traits pleins une coupe méridienne d'un ensemble monté 300 comprenant un pneumatique 301 selon l'invention monté sur une jante de montage 302 et comprenant un anneau interne de soutien 303. Sur cette même figure 3, on a représenté en traits pointillés un ensemble monté équivalent 300' - c'est-à-dire prévu pour une même utilisation - selon l'art antérieur et comprenant un pneumatique 301', une jante de montage 302' et un anneau de soutien 303'. La jante 302' de cet ensemble selon l'art antérieur comporte deux sièges de jantes de diamètres différents, chaque siège de forme tronconique présentant une génératrice faisant avec l'axe de rotation un angle, incliné vers l'extérieur du pneumatique, compris entre 4° et 30° inférieur à l'angle des génératrices correspondantes des sièges des bourrelets du pneumatique. Lesdits sièges ont ainsi des extrémités axialement extérieures sur des cercles de plus petits diamètres que ceux des cercles sur lesquels se trouvent les extrémités axialement intérieures. Chaque siège de la jante de l'art antérieur est prolongé axialement vers l'extérieur par une saillie ou hump dont la face axialement à l'extérieur détermine la largeur maximale de l'ensemble monté comme cela est clairement visible sur la figure 3.

La largeur hors tout de l'ensemble monté 300' selon l'art antérieur est déterminée par la largeur entre les points externes des bourrelets du pneumatique 301'.

L'ensemble monté 300 selon l'invention est dessiné en traits pleins et comprend un pneumatique 301, une jante 302 et un anneau de soutien 303. Le pneumatique 301 comporte un premier et un second flancs 304, 305 et un premier et un second bourrelets 306, 307 de structure différentes. Le premier flanc 304 de ce pneumatique prévu pour être placé sur l'extérieur d'un véhicule comporte un profilé de renfort 308 afin de protéger ledit flanc contre les agressions, ledit profilé étant disposé axialement à l'intérieur de l'armature de carcasse 309. Ce profilé 308 en forme de croissant est réalisé en mélange de caoutchouc et s'étend entre un point P1 sensiblement confondu avec le point de tangence T de la carcasse 309 avec l'élément de renforcement de bourrelet 310 et un point P2 axialement à l'intérieur par rapport à l'extrémité E des nappes de sommet 311. Le second flanc 305 destiné à être placé à l'intérieur du véhicule ne comporte pas de profilé de renfort et est prolongé par le second bourrelet 307 dont le développement interne est supérieur au développement du premier bourrelet 306.

De manière analogue à l'ensemble monté de l'art antérieur, il est prévu un anneau interne 303 qui est enfilé sur une portée 312 de la jante prévu axialement entre les sièges de jante 313, 314. Cet anneau interne 303 est destiné à la fois à éviter le cloquage du sommet du pneumatique pendant un roulage à pression nulle et également à supporter la charge du pneumatique dans cette configuration. Comme cela est représenté, le pneumatique est pourvu radialement au dessus du premier bourrelet 306 d'une rainure 315 s'ouvrant vers l'extérieur du pneumatique, ladite rainure assurant une grande flexibilité au flanc pourvu d'un profilé de renfort au voisinage du point inférieur P1 dudit profilé.

Cet ensemble pneumatique 300 présente une largeur hors tout S' sensiblement équivalente à la largeur hors tout de l'ensemble monté 300' de l'art antérieur à la différence que cette largeur hors tout S' correspond à la distance mesurée parallèlement à l'axe de rotation entre les points des flancs axialement les plus éloignés lorsque le pneumatique est monté sur sa jante et gonflé (cette largeur S' est supérieure à la largeur S mesurée entre les points axialement les plus éloignés de la jante 302). La réduction de la largeur de la jante et la réduction de la largeur de l'anneau de soutien compensent très largement l'augmentation de poids liée à la présence d'un profilé dans chacun des flancs, ce qui se traduit globalement par une réduction du poids total de l'ensemble monté 300 comparé au poids de l'ensemble monté 300' de l'art antérieur.

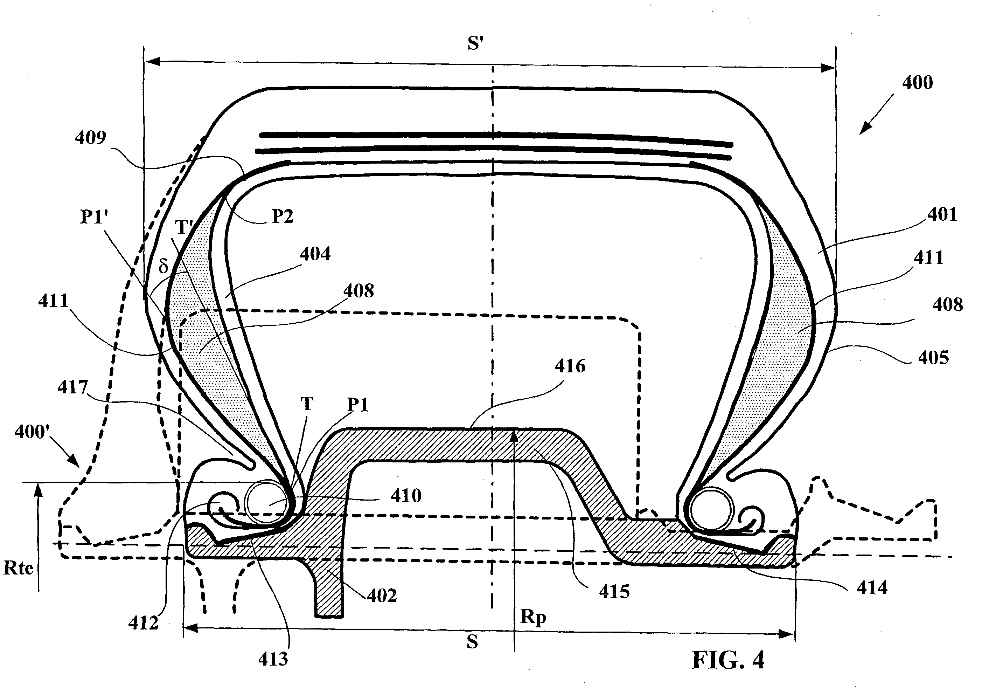

Dans une autre variante d'ensemble monté selon l'invention montré sur la figure 4, il est proposé de ne pas employer d'anneau de soutien. Sur la figure 4, on a représenté en traits pointillés un ensemble monté 400' selon l'art antérieur (identique à celui montré également en traits pointillés à la figure 3) dans lequel la jante comprend des sièges de diamètres différents. La variante d'ensemble monté 400 gonflé selon l'invention représentée en traits pleins comprend un pneumatique 401, symétrique par rapport à un plan médian perpendiculaire à l'axe de rotation, monté sur une jante 402 ayant des sièges 413, 414 de même diamètre. Chaque flanc 404, 405 comporte une armature de carcasse 409 dont le profil méridien a un sens de courbure constant dans le bourrelet et dans ledit flanc et a une tangente TT' au point de tangence T dudit profil avec un élément annulaire 410 dudit bourrelet faisant avec l'axe de rotation un angle ouvert vers l'extérieur égal à 70°.

Dans la variante présentée, un profilé de renfort 408 de flanc est positionné axialement sur l'extérieur de l'armature de carcasse 409. L'angle δ entre la tangente TT' à l'armature de carcasse au point de tangence T et la tangente P1P1' au point P1 au profilé 408 sur la face dudit profilé non en contact avec l'armature de carcasse est égal à 20°. Ce profilé 408 est en outre recouvert sur sa face axialement la plus à l'extérieur avec une armature de renforcement 411 qui est prolongée radialement vers l'intérieur par rapport audit profilé en suivant l'armature de carcasse jusque dans le coin de gomme 412 dans lequel est noyé le retournement de l'armature de carcasse; de cette façon, on assure un meilleur accrochage du profilé 408 à l'armature de carcasse 409 et à la tringle de bourrelet 410. En outre, cette armature de renforcement 411 est prolongée le long de l'armature de carcasse radialement au delà du point P2.

Le point P1 étant situé sensiblement au voisinage du point de tangence du profil de l'armature de carcasse avec l'élément annulaire de bourrelet 410, il est avantageux de pourvoir chaque bourrelet avec une rainure 417 ouverte axialement vers l'extérieur et radialement au dessus des pointes de bourrelet de manière à compenser la surépaisseur due au profilé et à former une sorte d'articulation près de P1.

La jante de montage 402 comporte des sièges 413, 414 de même diamètre présentant chacun une génératrice faisant avec l'axe de rotation un angle incliné vers l'extérieur du pneumatique. Axialement entre les deux sièges de jante 413, 414 est formée une nervure circonférentielle 415 présentant, radialement à l'extérieur, une surface cylindrique 416 dont le rayon Rp est supérieur à la plus grande des distances des points axialement les plus à l'intérieur des génératrices des sièges tronconiques de la jante 402. Les flancs du pneumatique selon l'invention comportant chacun un profilé de renfort participant au port de la charge dans des conditions de roulage à pression nulle, la nervure 415 prévue sur la jante a pour fonction de limiter le cloquage du sommet d'un pneumatique monté sur ladite jante et roulant; une telle disposition permet d'éviter l'emploi d'un anneau de soutien.

Préférentiellement, le rayon Rp des points de la nervure radialement les plus éloignés de l'axe de rotation est supérieur au rayon Rte des points radialement les plus éloignés de l'élément annulaire de bourrelet de manière à avoir une action suffisante pour éviter le cloquage du sommet du pneumatique. Cette fonction est remplie dès lors que l'écart entre le rayon Rp et le rayon Rte est au moins égal à 5 mm.

À l'image de ce qui a été décrit avec la variante de la figure 3; la largeur hors tout S' de l'ensemble pneumatique est supérieure à la largeur hors tout S de la jante de montage 402.

La réduction de largeur de la jante rendue possible par l'utilisation d'un pneumatique selon l'invention permet de réaliser une jante n'ayant pas nécessairement une gorge de montage.

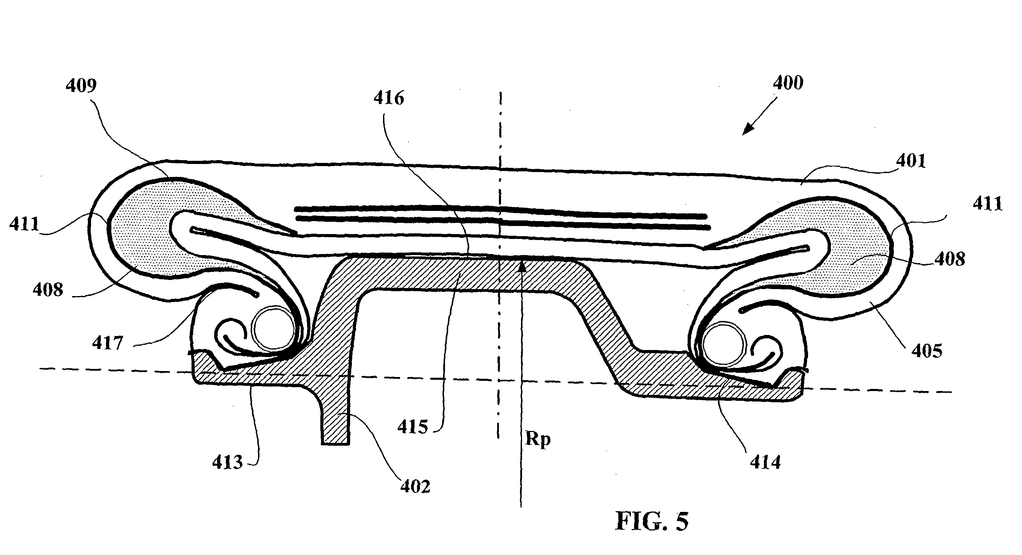

Sur la figure 5, est représentée une coupe méridienne de l'ensemble monté 400 identique à celui montré à la figure 4 lorsque cet ensemble 400 a une pression de gonflage nulle et est soumis à une charge donnée (les références employées sont identiques à celles de la figure 4 et renvoient aux mêmes éléments). Dans cette configuration fortement écrasée, on distingue que les flancs fortement courbés sont en appui sur les pointes des bourrelets : la rainure 417 s'est refermée et les parois radialement extérieure et intérieure délimitant ladite rainure sont en appui l'une sur l'autre. de cette manière, le pneumatique n'étant pas gonflé, la charge est soutenue essentiellement par les flancs et les bourrelets. On distingue de plus que la surface radialement extérieure de la nervure 415 de la jante 402 est localement en contact avec la partie interne du sommet du pneumatique de manière à empêcher le passage en contre courbure dudit sommet et ainsi le contraindre à rester en contact avec la chaussée. La combinaison des flancs pourvus de profilés protégeant lesdits flancs des agressions externes et avec les bourrelets dont les génératrices sont ouvertes vers l'extérieur permet de réaliser un ensemble pneumatique très performant que ce soit en roulage aux conditions nominales d'usage ou en conditions de roulage à pression faible voire nulle.

En effet, lorsque un pneumatique est dégonflé, il devient particulièrement sensible aux agressions externes (les flancs non renforcés étant facilement endommagés par des objets divers et cela d'autant qu'ils ne sont pas tendus par la pression de gonflage). Il est donc particulièrement intéressant de pourvoir ledit pneumatique avec des profilés de renfort dans les flancs selon l'invention.

## Revendications

1. Pneumatique (1, 101, 301, 401) comprenant au moins un premier bourrelet, dont le siège a une génératrice dont l'extrémité axialement intérieure est sur un cercle de diamètre supérieur au diamètre du cercle sur lequel se trouve l'extrémité axialement extérieure, le talon de bourrelet étant axialement à l'intérieur, alors que la pointe de bourrelet est axialement à l'extérieur, et une armature de carcasse radiale (12, 112, 309, 409) s'enroulant dans chaque bourrelet autour d'au moins un élément de renforcement de talon (5, 105, 310, 410), annulaire, inextensible et enrobé de mélange caoutchouteux, en allant de l'intérieur à l'extérieur pour former un retournement s'étendant dans un profilé de mélange caoutchouteux sous forme de coin ayant une dureté Shore A supérieure à la (aux) dureté(s) Shore A des mélanges caoutchouteux respectivement radialement au dessus dudit élément et du profilé axialement adjacent, le profil méridien d'armature de carcasse, lorsque le pneumatique est monté sur sa jante de service (2, 102, 302, 402) et gonflé à la pression recommandée, a un sens de courbure constant dans le premier bourrelet et un flanc le prolongeant radialement, et a une tangente TT' au point de tangence T dudit profil avec l'élément annulaire (5, 105, 310, 410) dudit premier bourrelet faisant avec l'axe de rotation un angle φ ouvert vers l'extérieur et compris entre 45° et 70°, ce pneumatique étant tel que, vu en coupe méridienne,
- au moins le flanc (7, 107, 304, 404) prolongeant le premier bourrelet comprend un profilé (14, 114, 308, 408) ayant, vu en coupe, sensiblement la forme d'un croissant délimité par une face interne et une face externe, ledit profilé s'étendant entre un point P1 et un point P2, le point P1 étant situé sur un cercle de rayon R1 supérieur au rayon externe Rte de l'élément annulaire de bourrelet et inférieur au rayon R0 du cercle sur lequel sont situés les points de l'armature de carcasse axialement les plus à l'extérieur du pneumatique monté sur sa jante et gonflé à sa pression d'utilisation, le point P2 étant situé sur un cercle de rayon R2 supérieur au rayon R0;
- l'une des faces - interne ou externe - du profilé (14, 114, 308, 408) suit le profil de l'armature de carcasse;
- la trace de la face du profilé à l'opposé de la face dudit profilé au plus près de l'armature de carcasse présente un seul sens de courbure.

2. Pneumatique selon la revendication 1 **caractérisé en ce que** l'angle δ que fait la tangente au point P1 sur la face du profilé opposée à la face au plus près de l'armature de carcasse avec la tangente TT' est en valeur absolue supérieur ou égal à 20°.

3. Pneumatique selon la revendication 1 ou la revendication 2 **caractérisé en ce que** le profilé est recouvert avec une armature complémentaire de renforcement destinée à renforcer ledit profilé, sur au moins une partie - entre P1 et P2 - de sa face qui n'est pas en contact avec l'armature de carcasse.

4. Pneumatique selon la revendication 3 **caractérisé en ce que** l'armature complémentaire de renforcement se prolonge radialement vers l'intérieur au delà du point P1 du profilé le long de l'armature de carcasse.

5. Pneumatique (101, 301) selon l'une des revendications 1 à 4 **caractérisé en ce que** le rayon R1 est inférieur à (3Rte+Ro)/4 et **en ce qu'**une rainure de découplage (121, 315) orientée suivant la direction circonférentielle est formée axialement et radialement à l'extérieur du premier bourrelet, ladite rainure étant délimitée par une surface radialement intérieure et une surface radialement extérieure de manière à ce que, vue en coupe, le point d'intersection K desdites deux surfaces soit situé à une distance Rri de l'axe de rotation du pneumatique sensiblement égale au rayon R1 du profilé de façon à permettre une mise en appui de la surface radialement supérieure sur la surface radialement intérieure lors d'un roulage à pression réduite ou nulle, le point d'intersection K des surfaces radialement intérieure et extérieure étant pris comme le point de tangence desdites surfaces avec une droite perpendiculaire à l'axe de rotation.

6. Pneumatique (101, 301) selon la revendication 5 **caractérisé en ce que**, vue en coupe méridienne, la surface radialement intérieure délimitant la rainure présente un point L axialement et radialement à l'extérieur situé à une distance de l'axe de rotation Rre supérieure ou égale à la distance Rri et **en ce que** les profils desdites surfaces sont appropriés pour venir en appui l'une sur l'autre lors d'un roulage à pression nulle ou quasi nulle.

7. Pneumatique selon la revendication 5 ou la revendication 6 **caractérisé en ce que**, vue en coupe méridienne, le point K d'intersection des surfaces radialement intérieure et extérieure délimitant la rainure (121, 315) est situé axialement à l'intérieur d'une droite perpendiculaire à l'axe de rotation et passant par le point de l'élément annulaire (105, 310) axialement le plus à l'extérieur.

8. Pneumatique (1, 101, 301) selon l'une des revendications 1 à 7 **caractérisé en ce que** le profilé (14, 114, 309) est placé dans le flanc axialement à l'intérieur de l'armature de carcasse (12, 112, 309) et **en ce que** l'angle β que fait la tangente à la face dudit profilé opposée à la face du même profilé en contact avec l'armature de carcasse avec l'axe de rotation du pneumatique est supérieur à 70°.

9. Pneumatique selon l'une des revendications 1 à 8 **caractérisé en ce qu'**il comprend un deuxième bourrelet dont le siège présente la même configuration que le premier siège du premier bourrelet, c'est-à-dire un siège dont la génératrice possède une extrémité axialement intérieure sur un cercle de diamètre supérieur au diamètre du cercle sur lequel se trouve l'extrémité axialement extérieure, ou siège dit incliné vers l'extérieur, le profil méridien d'armature de carcasse ayant un sens de courbure constant dans le deuxième bourrelet et le flanc le prolongeant radialement, et a une tangente TT' au point de tangence T dudit profil avec l'élément annulaire dudit deuxième bourrelet faisant avec l'axe de rotation un angle φ ouvert vers l'extérieur et compris entre 45° et 70°, le flanc prolongeant le deuxième bourrelet comprend un profilé ayant, vu en coupe, sensiblement la forme d'un croissant continu circonférentiellement et s'étendant entre deux points P1 et P2 situés de part et d'autre du point de l'armature de carcasse axialement le plus à l'extérieur lorsque le pneumatique est gonflé.

10. Pneumatique selon la revendication 9 **caractérisé en ce qu'**il a deux sièges dits inclinés vers l'extérieur et de diamètres différents.

11. Ensemble pneumatique (300, 400) formé d'un pneumatique (301, 401) selon la revendication 9 ou la revendication 10 et d'une jante de montage (302, 402) comportant deux sièges tronconiques, la génératrice de chaque siège faisant avec l'axe de rotation un angle compris entre 4° et 30°, l'extrémité axialement extérieure d'une génératrice étant distante de l'axe de rotation d'une quantité inférieure à la distance séparant l'extrémité axialement intérieure dudit axe, lesdits sièges tronconiques étant délimités axialement à l'extérieur par des saillies à parois axialement intérieures tronconiques, ladite jante comportant en outre des moyens de support (303, 415) destinés au moins à empêcher le cloquage du sommet du pneumatique, c'est-à-dire des moyens pour astreindre ledit sommet à rester en contact avec le sol dans des conditions de roulage à pression nulle.

12. Ensemble pneumatique (300) selon la revendication 11 **caractérisé en ce que** les moyens de support destinés à empêcher le cloquage du sommet du pneumatique comprennent une portée d'appui (312) prévue axialement entre les sièges de jante et un anneau de support (303) de dimensions appropriées, ledit anneau étant monté sur la portée d'appui (312).

13. Ensemble pneumatique selon l'une des revendications 11 ou 12 **caractérisé en ce que** lorsqu'il est monté sur un véhicule, le flanc pourvu d'un profilé est placé axialement à l'extérieur dudit véhicule de manière à protéger au mieux ledit flanc situé à l'extérieur dudit véhicule des agressions en roulage.

14. Ensemble pneumatique selon l'une des revendications 11 à 13 **caractérisé en ce que** les diamètres des sièges de jante sont différents.

15. Ensemble pneumatique (400) selon la revendication 11 **caractérisé en ce que** la jante (402) comporte, axialement entre ses sièges tronconiques, une nervure (415) formant support, les points de ladite nervure (415) les plus éloignés de l'axe de rotation étant situés sur des cercles de rayons Rp supérieurs au plus grand des rayons des cercles sur lesquels sont situés les points axialement les plus à l'intérieur des sièges tronconiques.

16. Ensemble pneumatique (400) selon la revendication 15 **caractérisé en ce que** le rayon Rp des points de la nervure radialement les plus éloignés de l'axe de rotation est supérieur au rayon Rte des points radialement les plus éloignés de l'élément annulaire de bourrelet.

17. Ensemble pneumatique (400) selon la revendication 16 **caractérisé en ce que** l'écart entre le rayon Rp des points de la nervure radialement les plus éloignés de l'axe de rotation et le rayon Rte des points radialement les plus éloignés de l'élément annulaire de bourrelet est au moins égal à 5 mm.

18. Ensemble pneumatique (300, 400) selon l'une des revendications 11 à 17 **caractérisé en ce que** la largeur hors tout S' de l'ensemble monté est supérieure à la largeur S séparant les points de la jante axialement les plus éloignés.

## Claims

1. A tyre (1, 101, 301, 401) comprising at least one first bead, the seat of which has a generatrix, the axially inner end of which lies on a circle of diameter greater than the diameter of the circle on which the axially outer end is located, the bead heel being axially to the inside, whereas the bead toe is axially to the outside, and a radial carcass reinforcement (12, 112, 309, 409) winding within each bead around at least one inextensible, annular heel reinforcement element (5, 105, 310, 410) which is coated with rubber mix, passing from the inside to the outside to form an upturn, extending into a profiled element of rubber mix in the form of a wedge having a Shore A hardness greater than the Shore A hardness(es) of the rubber mixes respectively radially above said element and the axially adjacent profiled element, the meridian profile of the carcass reinforcement, when the tyre is mounted on its operating rim (2, 102, 302, 402) and inflated to the recommended pressure, has a direction of curvature which is constant in the first bead and a sidewall extending it radially, and has a tangent TT' to the point of tangency T of said profile with the annular element (5, 105, 310, 410) of said first bead which forms with the axis of rotation an angle φ which is open towards the outside of between 45° and 70°, this tyre being such as, viewed in meridian section
- at least the sidewall (7, 107, 304, 404) extending the first bead comprises a profiled element (14, 114, 308, 408) having, viewed in section, substantially the form of a crescent defined by an inner face and an outer face, said profiled element extending between a point P1 and a point P2, the point P1 being located on a circle of radius R1 greater than the external radius Rte of the annular bead element and less than the radius R0 of the circle on which are located the axially outermost points of the carcass reinforcement of the tyre mounted on its rim and inflated to its use pressure, the point P2 being located on a circle of radius R2 greater than the radius R0;
- one of the - inner or outer - faces of the profiled element (14, 114, 308, 408) follows the profile of the carcass reinforcement;
- the trace of the face of the profiled element opposite the face of said profiled element closest to the carcass reinforcement has a single direction of curvature.

2. A tyre according to Claim 1, **characterised in that** the angle δ formed by the tangent to the point P1 on that face of the profiled element which is opposite the face closest to the carcass reinforcement with the tangent TT' is, in absolute value, greater than or equal to 20°.

3. A tyre according to Claim 1 or Claim 2, **characterised in that** the profiled element is covered with a complementary reinforcement armature intended to reinforce said profiled element, over at least one part - between P1 and P2 - of its face which is not in contact with the carcass reinforcement.

4. A tyre according to Claim 3, **characterised in that** the complementary reinforcement armature is extended radially towards the inside beyond the point P1 of the profiled element along the carcass reinforcement.

5. A tyre (101, 301) according to one of Claims 1 to 4, **characterised in that** the radius R1 is less than (3Rte+Ro)/4 and **in that** a decoupling groove (121, 315) which is oriented in the circumferential direction is formed axially and radially to the outside of the first bead, said groove being defined by a radially inner surface and a radially outer surface such that, viewed in section, the point of intersection K of said two surfaces is located at a distance Rri from the axis of rotation of the tyre which is substantially equal to the radius R1 of the profiled element so as to permit bearing of the radially upper surface on the radially inner surface when travelling at reduced or zero pressure, the point of intersection K of the radially inner and outer surfaces being taken as the point of tangency of said surfaces with a straight line perpendicular to the axis of rotation.

6. A tyre (101, 301) according to Claim 5, **characterised in that**, viewed in meridian section, the radially inner surface defining the groove has a point L axially and radially to the outside which is located at a distance Rre from the axis of rotation which is greater than or equal to the distance Rri and **in that** the profiles of said surfaces are appropriate for coming to bear on one another when travelling at zero or virtually zero pressure.

7. A tyre according to Claim 5 or Claim 6, **characterised in that**, viewed in meridian section, the point of intersection K of the radially inner and outer surfaces defining the groove (121, 315) is located axially to the inside of a straight line perpendicular to the axis of rotation and passing through the axially outermost point of the annular element (105, 310).

8. A tyre (1, 101, 301) according to one of Claims 1 to 7, **characterised in that** the profiled element (14, 114, 309) is placed in the sidewall axially to the inside of the carcass reinforcement (12, 112, 309) and **in that** the angle β formed by the tangent to the face of said profiled element which is opposite the face of the same profiled element in contact with the carcass reinforcement with the axis of rotation of the tyre is greater than 70°.

9. A tyre according to one of Claims 1 to 8, **characterised in that** it comprises a second bead, the seat of which has the same configuration as the first seat of the first bead, that is to say, a seat, the generatrix of which has an axially inner end on a circle of diameter greater than the diameter of the circle on which the axially outer end is located, or a seat said to be inclined towards the outside, the meridian profile of the carcass reinforcement having a constant direction of curvature in the second bead and the sidewall extending it radially, and has a tangent TT' to the point of tangency T of said profile with the annular element of said second bead which forms with the axis of rotation an angle φ which is open towards the outside and is between 45° and 70°, the sidewall extending the second bead comprises a profiled element having, viewed in section, substantially the form of a circumferentially continuous crescent and extending between two points P1 and P2, located on either side of that point of the carcass reinforcement which is axially outermost when the tyre is inflated.

10. A tyre according to Claim 9, **characterised in that** it has two seats said to be inclined towards the outside and of different diameters.

11. A tyre assembly (300, 400) formed of a tyre (301, 401) according to claim 9 or to claim 10 and a mounting rim (302, 402), comprising two frustoconical seats, the generatrix of each seat forming with the axis of rotation an angle of between 4° and 30°, the axially outer end of a generatrix being distant from the axis of rotation by a quantity less than the distance from the axially inner end to said axis, said frustoconical seats being defined axially to the outside by protrusions having frustoconical axially inner walls, the rim furthermore comprises support means (303, 415) intended at least to prevent the bulging of the crown of the tyre, that is to say means for forcing said crown to remain in contact with the ground under conditions of travel at zero pressure.

12. A tyre assembly (300) according to Claim 11 **characterised in that** the support means intended to prevent bulging of the crown of the tyre comprise a bearing surface (312) provided axially between the rim seats and a support ring (303) of suitable dimensions, said ring being mounted on the bearing surface (312).

13. A tyre assembly according to one of Claims 11or 12 **characterised in that** when it is mounted on a vehicle, the sidewall provided with a profiled element is placed axially to the outside of said vehicle so as to best protect said sidewall which is located on the outside of said vehicle from attack during travel.

14. A tyre assembly according to one of Claims 11 to 13, **characterised in that** the diameters of the rim seats are different.

15. A tyre assembly (400) according to Claim 11, **characterised in that** the rim (402) comprises, axially between its frustoconical seats, a rib (415) forming a support, the points of said rib (415) which are farthest from the axis of rotation being located on circles of radii Rp greater than the largest of the radii of the circles on which the axially innermost points of the frustoconical seats are located.

16. A tyre assembly (400) according to Claim 15, **characterised in that** the radius Rp of the points of the rib which are radially farthest from the axis of rotation is greater than the radius Rte of the points radially farthest from the annular bead element.

17. A tyre assembly (400) according to Claim 16, **characterised in that** the difference between the radius Rp of the points of the rib which are radially farthest from the axis of rotation and the radius Rte of the points radially farthest from the annular bead element is at least 5 mm.

18. A tyre assembly (300, 400) according to one of Claims 11 to 17, **characterised in that** the overall width S' of the mounted assembly is greater than the width S between the axially farthest points of the rim.

## Patentansprüche

1. Luftreifen (1, 101, 301, 401), der mindestens einen ersten Wulst, dessen Sitz eine Erzeugende aufweist, deren axial inneres Ende auf einem Kreis mit einem Durchmesser liegt, der größer ist als der Durchmesser des Kreises, auf dem sich das axial äußere Ende befindet, wobei der Wulstfuß des Reifenwulstes axial innen liegt, wohingegen die Wulstspitze sich axial außen befindet, und eine radiale Karkassenbewehrung (12, 112, 309, 409) aufweist, die in jedem Wulst um mindestens ein ringförmiges, nicht dehnbares und mit einer Kautschukmischung umhülltes Wulstverstärkungselement (5, 105, 310, 410) in Richtung von innen nach außen zur Bildung eines Hochschlags umgeschlagen ist und sich in ein keilförmiges Profilteil aus einer Kautschukmischung erstreckt, welche eine Shore A-Härte über der (den) Shore A-Härte(n) der Kautschukmischungen radial unter dem Element bzw. dem axial angrenzenden Profilteil aufweist, wobei das Meridianprofil der Karkassenbewehrung, wenn der Luftreifen auf der Betriebsfelge (2, 102, 302, 402) montiert und auf den empfohlenen Druck aufgepumpt ist, eine in dem ersten Wulst und der ihn in radialer Richtung fortsetzenden Flanke konstante Krümmungsrichtung aufweist und im Berührungspunkt T des Profils mit dem ringförmigen Element (5, 105, 310, 410) des ersten Wulstes eine Tangente TT' besitzt, die mit der Drehachse einen nach außen offenen Winkel ϕ von 45 bis 70° bildet, wobei der Luftreifen so vorliegt, dass im Meridianschnitt:
- zumindest die Flanke (7, 107, 304, 404), die in der Verlängerung des Wulstes liegt, ein Profilteil (14, 114, 308, 408) aufweist, das im Schnittbild in etwa die Form einer Sichel besitzt, welche durch eine Innenseite und eine Außenseite begrenzt wird, wobei sich das Profilteil zwischen einem Punkt P1 und einem Punkt P2 erstreckt, wobei sich der Punkt P1 auf einem Kreis mit dem Radius R1 befindet, der größer ist als der äußere Radius Rte des ringförmigen Elements des Wulstes und kleiner als der Radius R0 des Kreises, auf dem sich die axial am weitesten außen liegenden Punkte der Karkassenbewehrung des auf seiner Felge montierten und auf den Betriebsdruck aufgepumpten Luftreifens befinden, wobei sich der Punkt P2 auf einem Kreis mit dem Radius R2 befindet, der größer als der Radius R0 ist;
- eine der Seiten - die Innenseite oder die Außenseite - des Profilteils (14, 114, 308, 408) dem Profil der Karkassenbewehrung folgt; und
- der Verlauf der Seite des Profilteils, die der Seite des Profilteils gegenüberliegt, die sich näher an der Karkassenbewehrung befindet, nur eine einzige Krümmungsrichtung besitzt.

2. Luftreifen nach Anspruch 1, **dadurch gekennzeichnet, dass** der Winkel δ, den die Tangente im Punkt P1 an der Seite des Profilteils, die der näher an der Karkassenbewehrung liegenden Seite gegenüberliegt, und die Tangente TT' bilden, einen Absolutwert von 20° oder darüber aufweist.

3. Luftreifen nach Anspruch 1 oder 2, **dadurch gekennzeichnet, dass** das Profilteil zumindest zum Teil - zwischen P1 und P2 - mit einer zusätzlichen Verstärkungsbewehrung abgedeckt ist, die dazu dient, das Profilteil zu verstärken, an der Seite, die nicht mit der Karkassenbewehrung in Kontakt ist.

4. Luftreifen nach Anspruch 3, **dadurch gekennzeichnet, dass** sich die zusätzliche Verstärkungsbewehrung radial nach innen jenseits des Punktes P1 des Profilteils entlang der Karkassenbewehrung fortsetzt.

5. Luftreifen (101, 301) nach einem der Ansprüche 1 bis 4, **dadurch gekennzeichnet, dass** der Radius R1 kleiner ist als (3Rte+R0)/4, und dadurch, dass eine in Umfangsrichtung ausgerichtete Entkoppelungsrille (121, 315) axial und radial an der Außenseite des ersten Wulstes ausgebildet ist, wobei die Rille von einer radial innen liegenden Fläche und einer radial außen liegenden Fläche so begrenzt wird, dass sich der Schnittpunkt K der beiden Flächen im Schnittbild in einem Abstand Rri von der Drehachse des Luftreifens befindet, der in etwa dem Radius R1 des Profilteils entspricht, so dass die radial äußere Oberfläche beim Fahren mit Minderdruck oder ohne Druck mit der radial innen liegenden Fläche in Auflage kommen kann, wobei der Schnittpunkt K der radial inneren Fläche und der radial äußeren Fläche als Berührungspunkt der Flächen mit einer zur Drehachse senkrechten Geraden angenommen wird.

6. Luftreifen (101, 301) nach Anspruch 5, **dadurch gekennzeichnet, dass** die radial innere Fläche, die die Rille begrenzt, im Meridianschnitt einen Punkt L aufweist, der sich axial und radial außen in einem Abstand Rre von der Drehachse befindet, der mindestens dem Abstand Rri entspricht, und dadurch, dass die Profile der Flächen so sind, dass sie beim Fahren ohne Druck oder Minderdruck miteinander in Auflage kommen können.

7. Luftreifen nach Anspruch 5 oder 6, **dadurch gekennzeichnet, dass** der Schnittpunkt K der radial inneren Oberfläche und radial äußeren Oberfläche, die die Rille (121, 315) begrenzen, im Meridianschnitt in axialer Richtung innen an einer zur Drehachse senkrechten Geraden gelegen ist, die durch den axial am weitesten außen liegenden Punkt des ringförmigen Elements (105, 310) verläuft.

8. Luftreifen (1, 101, 301) nach einem der Ansprüche 1 bis 7, **dadurch gekennzeichnet, dass** das Profilteil (14, 114, 309) in der Flanke axial an der Innenseite der Karkassenbewehrung (12, 112, 309) angebracht ist, und dadurch, dass der Winkel β, den die Tangente an der Seite des Profilteils, die der Seite des Profilteils, die mit der Karkassenbewehrung in Kontakt ist, gegenüberliegt, mit der Drehachse des Luftreifens bildet, über 70° liegt.

9. Luftreifen nach einem der Ansprüche 1 bis 8, **dadurch gekennzeichnet, dass** er einen zweiten Wulst aufweist, dessen Sitz die gleiche Konfiguration hat wie der erste Sitz des ersten Wulstes, d.h. einen Sitz, dessen Erzeugende ein axial inneres Ende auf einem Kreis mit einem Durchmesser aufweist, der größer ist als der Durchmesser des Kreises, auf dem sich das axial äußere Ende befindet, oder ein so genannter nach außen geneigter Sitz, wobei das Meridianprofil der Karkassenbewehrung eine in dem zweiten Wulst und der ihn in radialer Richtung verlängernden Flanke konstante Krümmungsrichtung besitzt und am Berührungspunkt T des Profilteils mit dem ringförmigen Element des zweiten Wulstes eine Tangente TT' aufweist, die mit der Drehachse einen nach außen offenen Winkel ϕ von 45 bis 70° bildet, wobei die den zweiten Wulst fortsetzende Flanke ein Profilteil enthält, welches im Schnittbild die in Umfangsrichtung kontinuierliche Form einer Sichel aufweist und sich zwischen zwei Punkten P1 und P2 erstreckt, die sich jeweils auf einer Seite des Punktes der Karkassenbewehrung befinden, der sich in axialer Richtung am weitesten außen befindet, wenn der Luftreifen aufgepumpt ist.

10. Luftreifen nach Anspruch 9, **dadurch gekennzeichnet, dass** er zwei so genannte nach außen geneigte Sitze von unterschiedlichen Durchmessern aufweist.

11. Luftreifeneinheit (300, 400), die aus einem Luftreifen (301, 401) nach Anspruch 9 oder nach Anspruch 10 und einer Montagefelge (302, 402) gebildet wird, welche zwei kegelstumpfförmige Sitze aufweist, wobei die Erzeugende jedes Sitzes mit der Drehachse einen Winkel von 4 bis 30° bildet, wobei das axial äußere Ende einer Erzeugenden von der Drehachse weniger weit entfernt ist als der Abstand, den das axial innere Ende von der Achse hat, wobei die kegelstumpfförmige Sitze axial nach außen durch Erhebungen mit axial innen kegelstumpfförmigen Wänden begrenzt werden, wobei die Felge ferner Stützmittel (303, 415) aufweist, die zumindest dazu dienen sollen, das Ausbeulen des Scheitels des Luftreifens zu verhindern, d.h. Mittel, die den Scheitel beim Fahren ohne Druck Null in Kontakt mit dem Boden halten.

12. Luftreifeneinheit (300) nach Anspruch 11, **dadurch gekennzeichnet, dass** die Stützmittel, die dazu vorgesehen sind, das Ausbeulen des Scheitels des Luftreifens zu verhindern, eine Auflagefläche (312), die axial zwischen den Felgensitzen vorgesehen ist, und einen Stützring (303) von geeigneten Abmessungen umfassen, wobei der Ring auf der Auflagefläche (312) montiert ist.

13. Luftreifeneinheit nach einem der Ansprüche 11 oder 12, **dadurch gekennzeichnet, dass** die mit einem Profilteil versehene Flanke in axialer Richtung an der Außenseite des Fahrzeugs angeordnet ist, damit die außen am Fahrzeug befindliche Flanke beim Fahren vor äußeren Einwirkungen besser geschützt ist, wenn die Einheit an einem Fahrzeug montiert ist.

14. Luftreifeneinheit nach einem der Ansprüche 11 bis 13, **dadurch gekennzeichnet, dass** die Durchmesser der Felgensitze unterschiedlich sind.

15. Luftreifeneinheit (400) nach Anspruch 11, **dadurch gekennzeichnet, dass** die Felge (402) axial zwischen den kegelstumpfförmigen Sitzen eine Rippe (415) aufweist, die einen Stützkörper bildet, wobei die Punkte der Rippe (415), die am weitesten von der Drehachse entfernt sind, auf Kreisen mit Radien Rp angeordnet sind, die größer sind als die größten Radien der Kreise, auf denen sich die axial am weitesten innen liegenden Punkte der kegelstumpfförmigen Sitze befinden.

16. Luftreifeneinheit (400) nach Anspruch 15, **dadurch gekennzeichnet, dass** der Radius Rp der Punkte der Rippe, die in radialer Richtung am weitesten von der Drehachse entfernt sind, größer ist als der Radius Rte der radial am weitesten außen liegenden Punkte des ringförmigen Elements des Wulstes.

17. Luftreifeneinheit (400) nach Anspruch 16, **dadurch gekennzeichnet, dass** der Unterschied zwischen dem Radius Rp der Punkte der Rippe, die radial am weitesten von der Drehachse entfernt sind, und dem Radius Rte der radial am weitesten außen liegenden Punkte des ringförmigen Elements des Wulstes mindestens 5 mm beträgt.

18. Luftreifeneinheit (300, 400) nach einem der Ansprüche 11 bis 17, **dadurch gekennzeichnet, dass** die Gesamtbreite S' der montierten Einheit über der Breite S liegt, die zwischen den axial am weitesten auseinander liegenden Punkten der Felge liegt.
